**Europäisches Patentamt**

**European Patent Office**

**Office européen des brevets**

(19)

(11) Veröffentlichungsnummer: **0 095 082**
**B1**

(12) **EUROPÄISCHE PATENTSCHRIFT**

(45) Veröffentlichungstag der Patentschrift:
03.09.86

(51) Int. Cl.⁴: **B 29 C 65/04**

(21) Anmeldenummer: **83104571.1**

(22) Anmeldetag: **10.05.83**

(54) Vorrichtung zum Verschweissen eines Deckels mit einem Behälterrumpf.

(30) Priorität: **26.05.82 DE 3219749**

(43) Veröffentlichungstag der Anmeldung:
**30.11.83 Patentblatt 83/48**

(45) Bekanntmachung des Hinweises auf die Patenterteilung:
**03.09.86 Patentblatt 86/36**

(84) Benannte Vertragsstaaten:
**AT CH DE FR GB IT LI SE**

(56) Entgegenhaltungen:
**DE-A-2 336 075**
**DE-A-2 339 707**
**DE-A-2 747 711**
**FR-A-2 464 890**
**US-A-3 357 808**
**US-A-4 155 794**

(73) Patentinhaber: **ROBERT BOSCH GMBH, Postfach 50, D-7000 Stuttgart 1 (DE)**

(72) Erfinder: **Heber, Lothar, Finkenstrasse 5, D-7051 Waiblingen- Hohenacker (DE)**
Erfinder: **Vögele, Günther, Cheruskerstrasse 19, D-7036 Schönaich (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 095 082 B1

## Beschreibung

### Stand der Technik

Die Erfindung geht aus von einer Vorrichtung zum Verschweißen eines Deckels mit einem Behälterrumpf nach der Gattung des Anspruchs 1. Bei einer beispielsweise durch die FR-A-2 464 890 bekannten Vorrichtung dieser Art induziert die Spule in der Metallschicht des Deckels Wirbelströme, die ihrerseits die Schweißwärme erzeugen, die zum Verschweißen der im Nahtbereich des Flansches des Deckels und des Rumpfes aneinander anliegenden thermoplastischen Schichten des Deckels und des Rumpfes nötig ist. Da die Spule völlig in einem Stempel eingebettet ist, wobei ihr Außenumfang zum Flansch des Deckels hin einen Abstand aufweist, der etwa gleich groß ist, wie der Abstand zum Spiegel des Deckels, wird nicht nur der Flansch, sondern in gleicher Weise auch der an diesen angrenzende Bereich des Deckelspiegels vom konzentrierten elektromagnetischen Wechselfeld der Spule erfaßt und erwärmt. Abgesehen von dem dazu nötigen hohen Energieaufwand besteht bei der bekannten Vorrichtung der Nachteil, daß zum Verfestigen der Schweißnaht durch Abführen der Wärme eine verhältnismäßig lange Zeitdauer notwendig ist, da wegen des fehlenden Temperaturgefälles zwischen dem Flansch und dem daran angrenzenden Bereich des Deckelspiegels keine Wärme von der Schweißnaht in den Deckelspiegel abfließen kann, vielmehr der größte Teil der abzuführenden Wärmemenge vom die Spule tragenden Stempel zu übernehmen ist. Es ist daher Aufgabe der Erfindung, eine Deckeleinschweißvorrichtung zu schaffen, mit der die zum Bilden einer Schweißnaht zwischen dem Flansch des Deckels und einer Öffnung des Rumpfes nötige Wärmemenge genau dosiert im Nahtbereich erzeugt wird, so daß ein schnelles Verfestigen der Naht nach dem Aufschmelzen der zu vereinigenden Schichtbereiche möglich ist.

### Vorteile der Erfindung

Es hat sich überraschend gezeigt, daß mit der erfindungsgemäßen Vorrichtung mit den kennzeichnenden Merkmalen des Anspruchs 1 hergestellte ringförmige Schweißnähte zwischen Deckel und Behälterrumpf keine Unterbrechung haben und einwandfrei dicht sind. Die Schweißnaht ist schmal, so daß der Energieaufwand und die Schweißdauer niedrig sind. Ferner kann die Induktionsspule einfach und paßgenau hergestellt werden.

## Zeichnung

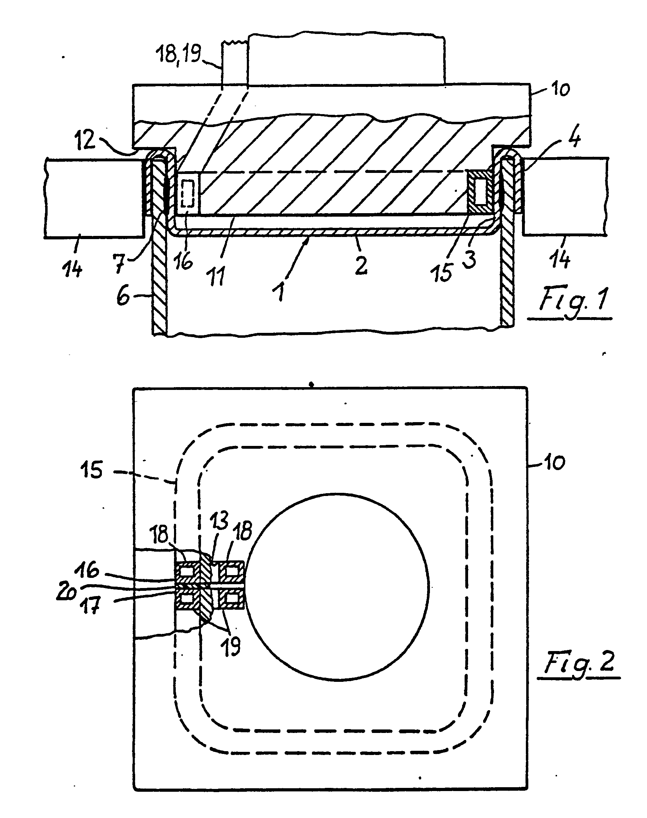

Ein Auzführungsbeispiel der Erfindung ist in der Zeichnung dargestellt und in der nachfolgenden Beschreibung näher erläutert. Es zeigen Figur 1 eine Vorrichtung zum Verschweißen eines Deckels mit einem Behälterrumpf im Querschnitt und Figur 2 die Vorrichtung nach Pigur 1 in Draufsicht.

### Beschreibung der Erfindung

Ein Deckel 1, der einen ebenen Spiegel 2 und einen von diesem nach oben abstehenden Flansch 3 sowie einen daran umgebogenen Randfalz 4 hat, soll mit der Öffnung eines Behälterrumpfes 6 dicht und fest verbunden werden. Der Deckel 1 besteht aus einem Verbundwerkstoff mit mehreren Schichten, von denen die dem Inneren des Behälters zugewandte Schicht aus einem schweißbaren thermoplastischen Kunststoff, beispielsweise Polyäthylen oder Polypropylen, und die daran anliegende Schicht aus einer dünnen Metallfolie, vorzugsweise einer Aluminiumfolie, bestehen. Eine Trägerschicht aus Kunststoff bildet die Außenschicht. Der Behälterrumpf 6 besteht ebenfalls aus einen Verbundwerkstoff mit einer Innenschicht aus schweißbarem thermoplastischen Kunststoff, einer mittleren Metallschicht und einer tragenden Außenschicht.

Zum Verbinden des Deckels 1 mit dem Behälterrumpf 6 wird der Deckel 1 in die Öffnung des Behälterrumpfes 6 eingesetzt, so daß der Flansch 3 an der Innenseite des Endes des Behälterrumpfes 6 anliegt und der Falzrand 4 dieses Ende umgreift. Zum Festigen und Abdichten der Verbindung wird der Flansch 3 mit dem Behälterrumpf 6 durch eine ringförmige Schweißnaht 7 verbunden, in deren Bereich die thermoplastischen Schichten des Deckels 1 und des Behälterrumpfes 6 kurzzeitig aufgeschmolzen und zusammengepreßt werden.

Zum Herstellen dieser Schweißnaht 7 hat die Vorrichtung einen Stempel 10 mit einem in den Hohlraum des Deckels 1 passenden Endteil 11 und einer daran anschließenden Stützschulter 12. Gegen die Seiten des Endteils 11 des Stempels 10 sind Preßbacken 14 bewegbar, welche den Flansch 3 und den Randfalz 4 mit dem Behälterrumpfende verpressen.

Im Endteil 11 des aus einem elektrisch isolierendem Material bestehenden Stempels 10 ist eine Induktionsspule 15 mit einer einzigen Windung so eingesetzt, daß deren Außenseite unmittelbar am Flansch 3 des Deckels 1 anliegt. Die Enden 16, 17 der einen Windung der Spule 15 stoßen mit einem Abstand von etwa 0,5-1 mm stumpf gegeneinander. Anschlußleitungen 18, 19 stehen senkrecht von den Enden 16, 17 der Spule 15 ab und verlaufen unter einem Winkel von etwa 75° zur Ebene der Spule 15. Die beiden parallel in einer Nut 13 des Stempels 10 verlaufenden Anschlußleitungen 18, 19 und die Enden 16, 17 der Spule 15 sind voneinander durch eine Isolierfolie 20 getrennt.

Die Spule 15 ist aus einem Kupferhohlstrang mit Rechteckprofil zu einem Quadrat mit abgerundeten Ecken gebogen, wobei ihre Enden 16, 17 in einer Geradstrecke liegen. Die breite Seite bzw. Höhe des Rechteckprofils, die schmaler ist als die Höhe des Flansches 3 des Deckels 1, ist dem Schweißbereich des Flansches 3 zugekehrt.

Zum Schweißen wird das Endteil 11 des Stempels 10 in den Hohlraum des Deckels 1 eingeführt, so daß die Außenseite der Spule 15 am Flansch 3 des Deckels 1 anliegt, wobei ihre Unterseite und ihre Oberseite zum Spiegel 2 des Deckels 1 bzw. zum oberen Rand des Flansches 3 auf Abstand liegen. Die über die Anschlußleitungen 18, 19 und andere Mittel mit einem Hochfrequenzgenerator verbundene Spule 15 wird während einer Dauer von 0,5 Sekunden mit einem Wechselstrom von 2 MHz beaufschlagt. Dabei erzeugt das elektromagnetische Feld der Spule 15 in der Metallschicht des Deckelsz 1 in dem der Spule 15 nahen Bereich Wirbelströme, die die Metallfolie erhitzen. Die erzeugte Wärme wird auf die angrenzenden thermoplastischen Schichten des Dekkels 1 und des Behälterrumpfes 6 übertragen, die sich auf Schweißtemperatur erhitzen und unter dem Druck der Preßbacken 14 zu einer Schweißnaht 7 verbinden. Es hat sich gezeigt, daß auch der in Deckung mit dem Spalt zwischen den Enden 16, 17 der Spule 15 liegende Bereich der thermoplastischen Schichten des Deckels 1 und des Behälterrumpfes 6 soviel Wärme erhält, daß auch dieser Bereich fest und dicht verschweißt wird. Um eine Aufheizung der Spule 15 und des Stempels 10 zu verhindern, läßt man durch den Hohlraum der Spule laufend ein Kühlmittel strömen. Bei einem genügend langen Hochfrequenzstromimpuls wird in der Aluminiumschicht des Flansches 3 und auch des Falzrandes 4 soviel Wärme erzeugt, daß auch der Falzrand 4 mit der Außenseite des Behälterrumpfes 6 verschweißt.

## Patentansprüche

1. Vorrichtung zum befestigen eines Deckels (1), der einen abgewinkelten Flansch (3) aufweist, in einer Öffnung eines Behälterrumpfes (6) durch induktives Verachweißen des an der Innenseite des Rumpfes anliegenden Flansches mit dem Rumpf, wobei der Deckel eine innere Schicht aus einem schweißbaren Kunststoff, eine Zwischenschicht aus Metall sowie eine äußere Trägerschicht und der Rumpf eine innere Schicht aus einem schweißbaren Kunststoff aufweisen, mit einer in den vom Flansch des Deckels umgebenen Hohlraum eintauchbaren, eine einzige Windung aus einem Hohlleiter mit Rechteckprofil aufweisenden Spule (15), die mit hochfrequentem Wechselstrom gespeist wird, dadurch gekennzeichnet, daß die Windung der Spule (15) mit ihrem Außenumfang an der den Hohlraum umgebenden Innenseite des Flansches (3) anliegend ausgebildet ist, und daß die beiden Enden (16, 17) der Windung in einem Abstand von weniger mm gegeneinander stehen.

2. Vorrichtung nach Anspruch 1, dadurch gekennzeichnet, daß an den Enden (16, 17) der Windung rechtwinklig abstehende Anschlußleitungen (18, 19) unter einem Winkel von etwa 75° zur Ebene der Spule (15) parallel nebeneinander verlaufen.

3. Vorrichtung nach Anspruch 1 oder 2, dadurch gekennzeichnet, daß der Außenumfang der Spule (15) von einer Breitseite des Rechteckprofils des Hohlleiters der Windung gebildet wird.

## Claims

1. Apparatus for fixing a lid (1) having an angular flange (3) in an opening of a tank body (6) by inductive welding of the flange lying in contact with the side of the body to the body, the lid having an inner layer made of a weldable plastic, an intermediate layer made of metal and an outer base layer and the body having an inner layer made of a weldable plastic, with a coil (15) which has a single winding of a hollow waveguide of rectangular profile, can be plunged into the hollow space surrounding the flange of the lid and is fed with high-frequency alternating current, characterized in that the winding of the coil (15) is designed with its outer circumference lying in contact with the inner side of the flange (3) surrounding the hollow space, and in that the two ends (16, 17) of the winding are spaced apart by less than 1 mm.

2. Apparatus according to Claim 1, characterized in that connecting leads (18, 19) extending at right angles from the ends (16, 17) of the winding run parallel next to each other at an angle of about 75° to the plane of the coil (15).

3. Apparatus according to Claim 1 or 2, characterized in that the outer circumference of the coil (15) is formed by one breadth of the rectangular profile of the hollow waveguide of the winding.

## Revendications

1.- Dispositif pour fixer un couvercle (1), qui comporte une bride (3) repliée en U, dans une ouverture de corps (6) d'un conteneur en soudant par induction avec le corps du conteneur la bride s'appliquant sur la face interne de ce corps, le couvercle comportant une couche interne d'une matière plassique soudable, une couche intermédiaire en métal, ainsi qu'une couche porteuse externe, tandis que le corps comporte une couche interne en une matière plastique soudable, le soudage s'effectuant à l'aide d'une bobine (15) aui est susceptible d'être plongée dans l'espace creux entouré par la bride du couvercle et qui comporte une spire unique constituée d'un conducteur creux à profil rectangulaire, cette bobine étant alimentée par un courant alternatif haute fréquence, dispositif caractérisé en ce que la spire de la bobine (15) est réalisée de façon que sa périphérie externe s'applique sur la face interne, entourant l'espace creux, de la bride (3), et que les deux extrémités (16, 17) de cette spire soient face à face à une distance de moins d'un millimètre.

2.- Dispositif selon la revendication 1, caractérisé en ce qu'aux extrémités (16, 17) de la spire, et s'en écartant à angle droit, des conducteurs de raccordement (18, 19) s'étendent parallèlement l'un a l'autre sous un angle d'environ 75° par rapport au plan de la bobine (15).

3.- Dispositif selon 12 revendication 1 ou 2, caractérisé en ce que la périphérie externe de la bobine (15) est constituée par un côté large du profil rectangulaire du conducteur creux de la spire.

Fig. 1

Fig. 2